# EUROPÄISCHE PATENTSCHRIFT

(11) **EP 1 468 863 B1**
(45) Veröffentlichungstag und Bekanntmachung des Hinweises auf die Patenterteilung: **27.01.2010**
(21) Anmeldenummer: 04004287.1
(22) Anmeldetag: 26.02.2004
(51) Int. Cl.: B60L 11/18, B60L 5/00, H02J 7/00

(54) **Anlage und Verfahren zur Überwachung einer elektrischen Batterie in einem Unterseeboot**
Device and method of monitoring an electric battery in a submarine
Dispositif et procédé de contrôle d'une batterie éléctrique dans un submersible

(30) Priorität: 17.04.2003 DE 10317741
(43) Veröffentlichungstag der Anmeldung: 20.10.2004
(73) Patentinhaber: Howaldtswerke-Deutsche Werft GmbH, 24143 Kiel (DE)
(72) Erfinder: Iskra, Michael, Dipl.-Ing., 24146 Kiel (DE)
(74) Vertreter: Hemmer, Arnd

(56) Entgegenhaltungen:
- EP-A- 1 388 921
- US-A- 5 578 915
- US-A- 5 773 962
- KUTKUT N H ET AL: "Dynamic equalization techniques for series battery stacks" TELECOMMUNICATIONS ENERGY CONFERENCE, 1996. INTELEC '96., 18TH INTERNATIONAL BOSTON, MA, USA 6-10 OCT. 1996, NEW YORK, NY, USA,IEEE, US, 6. Oktober 1996 (1996-10-06), Seiten 514-521, XP010204362 ISBN: 0-7803-3507-4

## Beschreibung

Die Erfindung betrifft eine Anlage sowie ein Verfahren zur Überwachung einer elektrischen Batterie in einem Unterseeboot.

Für konventionelle Unterseeboote ist die Batterie in bestimmten Einsatzsituationen die einzige Energiequelle. Es ist wünschenswert, möglichst viel Energie aus diesem Speicher entnehmen zu können. Abgesehen vom aktiven Volumen ist die entnehmbare Energie von einer Reihe von konstruktiven Eigenschaften der Batterie sowie von einigen Betriebsparametern abhängig. Ein wichtiger Parameter ist dabei die Zellenspannung. Das Absinken der Zellenspannung unter einen bestimmten Wert, eine so genannte Tiefentladung kann zu einer irreversiblen Schädigung der Zelle führen. Daher muss eine solche Tiefentladung im Betrieb sicher verhindert werden. Um Tiefentladungen zu vermeiden, werden Batterien von Unterseebooten häufig nur zu 80% ihrer möglichen Kapazität entladen, um bei der gegebenen Fertigungsstreuung genügend Sicherheit gegen Tiefentladung zu haben. Dies hat jedoch den Nachteil, dass die Kapazität der Batterie nicht vollständig ausgenutzt werden kann.

Diesem Nachteil kann zwar einerseits dadurch begegnet werden, dass man die Zellenspannungen der einzelnen Zellen einander angleicht, wie in "Dynamic Equalization Techniques for Series Battery Stado", INTE-LEC '96 IEEE, Boston, 1996, 514-521 gezeigt. Andererseits lassen sich Spannungen einzelner Batteriemodule, wie in US 5,578,915 A und US 5,773,962 A offenbart, überwachen. Jedoch kann auch in diesen Fällen keine vollständige Ausschöpfung der Batteriekapazität erfolgen.

Es ist daher Aufgabe der Erfindung, eine Anlage sowie ein Verfahren zur Überwachung einer elektrischen Batterie in einem Unterseeboot zu schaffen, welche eine bessere Ausnutzung der Batteriekapazität ermöglichen.

Diese Aufgabe wird durch eine Anlage mit den in Anspruch 1 angegebenen Merkmalen sowie durch ein Verfahren mit den im Anspruch 11 angegebenen Merkmalen gelöst. Bevorzugte Ausführungsformen ergeben sich aus den zugehörigen Unteransprüchen.

Die erfindungsgemäße Anlage dient zur Überwachung einer elektrischen Batterie bzw. von elektrischen Batterien in einem Unterseeboot,
wobei eine Batterie eine Vielzahl von Batteriezellen aufweist. Die erfindungsgemäße Anlage weist eine zentrale Auswerteeinrichtung auf, welche zur kontinuierlichen Erfassung von Zellenspannungen einzelner Batteriezellen eingerichtet ist. Diese automatische Erfassung einzelner Zellenspannungen der Batteriezellen hat den Vorteil, dass die einzelnen Zellen unabhängig voneinander überwacht werden, so dass eine Tiefentladung einzelner Zellen frühzeitig erkannt werden kann. Dies ermöglicht, diejenigen Zellen durch kontinuierliche Überwachung zu ermitteln, deren Zellenspannung zuerst einen kritischen Wert erreichen bzw. unterschreiten wird. Bis diese Zellenspannung bei einer ersten Zelle den kritischen Grenzwert erreicht, kann die Kapazität der Batterie ausgenutzt werden. Das bedeutet, die Batterie kann solange entladen werden, bis ihr "schwächstes Glied", das heißt die leistungsschwachste Zelle die kritische Zellenspannung erreicht. Es ist somit nicht mehr erforderlich pauschal nur 80% der Batteriekapazität auszunutzen, um eine genügende Sicherheit vor Tiefentladung einzelner Zellen zu haben. Vielmehr ermöglicht die kontinuierliche Überwachung einzelner Batteriezellen die vorhandene Batteriekapazität tatsächlich soweit auszunutzen, wie es aktuelle Betriebsparameter, das heißt insbesondere die aktuellen Zellenspannungen der einzelnen Batteriezellen ermöglichen. Dies ermöglicht bei normaler Streuung der elektrischen Daten der Batteriezellen eine mindestens 90% Ausnutzung der Batteriekapazität. Darüber hinaus macht die erfindungsgemäße Anlage, welche die kontinuierliche und individuelle Überwachung einzelner Zellenspannungen ermöglicht, die manuelle Bestimmung einzelner Zellenspannungen überflüssig, welche fehleranfällig, umständlich und aufgrund eines möglichen Potenzials von mehreren hundert Volt gegenüber umgebenden Anlagenteilen gefährlich ist. Die erfindungsgemäße Anlage ermöglicht eine automatische, kontinuierliche Überwachung des Batteriezustandes auf Grundlage aktueller Betriebsparameter.

Weiterhin ist in der Auswerteeinrichtung zumindest ein Grenzwert für die Zellenspannung speicherbar und die Auswerteeinrichtung zur Überwachung der erfassten Zellenspannungen der einzelnen Batteriezellen auf diesen Grenzwert hin eingerichtet. Der Grenzwert entspricht der kritischen Zellenspannung, bis zu der eine einzelne Batteriezelle entladen werden kann, ohne dass es zu einer Schädigung der Batteriezelle aufgrund von Tiefentladung kommt. Der Grenzwert wird durch die Auswerteeinrichtung selber bestimmt und abgespeichert. Die individuellen Zellenspannungen der einzelnen Batteriezellen, welche wie oben beschrieben im Wesentlichen kontinuierlich erfasst werden, werden derart überwacht, dass die Auswerteeinrichtung beim Erreichen des Grenzwertes durch eine Zellenspannung einer einzelnen Batteriezelle die Grenze für die maximal mögliche Entladung der gesamten Batterie ohne Schädigung einzelner Batteriezellen erkennt.

Zudem ist erfindungsgemäß in der Auswerteeinrichtung jeweils ein Grenzwert für jede einzelne Batteriezelle speicher- und überwachbar. So kann für jede Batteriezelle individuell genau der Grenzwert für die Zellenspannung festgelegt werden, bis zu dem die jeweilige Batteriezelle entladen werden kann, ohne dass es zu einer Schädigung aufgrund von Tiefentladung kommt. Dies ermöglicht eine noch genauere Entladung und somit vollständigere Ausnutzung der tatsächlich zur Verfügung stehenden Batteriekapazität. Einzelne Grenzwerte für die einzelnen Batteriezellen ermöglichen eine genauere Anpassung an Unterschiede aufgrund von unterschiedlichen Betriebsparametern zwischen den einzelnen Zellen.

Dabei ist die Auswerteeinrichtung eingerichtet zur dynamischen Bildung der Grenzwerte für die Zellenspannungen auf Grundlage aktueller Betriebsparameter der Batterie. Diese dynamische Bildung der Grenzwerte kann derart erfolgen, dass ein einheitlicher Grenzwert der Zellenspannung für sämtliche Batteriezellen der Batterie gebildet wird oder dass mehrere Grenzwerte für unterschiedliche Zellen, vorzugsweise jeweils ein individueller Grenzwert für jede Batteriezelle gebildet werden. Die dynamische Bildung der Grenzwerte durch die Auswerteeinrichtung ermöglicht, die Grenzwerte an aktuelle Betriebsparameter anzupassen. Dies ermöglicht eine bessere Ausnutzung der zur Verfügung stehenden Batteriekapazität, da bei der Entladung und der Berechnung der möglichen Entladedauer die aktuellen Betriebsparameter der Batterie bzw. der einzelnen Batteriezellen berücksichtigt werden, um die kritische Zellenspannung, bis zu der eine beschädigungsfreie Entladung möglich ist, zu bestimmen. Bevorzugt erfolgt die Bestimmung der Grenzwerte durch die Auswerteeinrichtung auf Grundlage des Entladestroms der Batterie. Dazu wird der Entladestrom der Batterie von der Auswerteeinrichtung über entsprechende Sensormittel vorzugsweise kontinuierlich erfasst. Die kritische Zellenspannung, bei welcher eine Schädigung der Batteriezelle aufgrund von Tiefentladung eintreten kann, ändert sich in Abhängigkeit des Entladestroms. So verringert sich mit steigendem Entladestrom die Entladespannung und somit die Grenzspannung bzw. der Grenzwert der Zellenspannung, bis zu welcher eine schädigungsfrei Entladung der Batteriezelle möglich ist. Die Erfassung des Entladestroms erfolgt vorzugsweise über die gesamte Batterie oder über einzelne Teilbatterien.

Vorzugsweise ist die Auswertereinrichtung zur kontinuierlichen Überwachung der einzelnen Zellenspannungen aller Batteriezellen eingerichtet. Eine solche individuelle Überwachung aller Batteriezellen ermöglicht die genaue Bestimmung der schwächsten Batteriezelle, das heißt derjenigen Batteriezelle, deren Grenzwert für die Zellenspannung bei aktuellen Betriebsbedingungen als erstes erreicht werden wird. Das Erreichen dieser Grenzspannung bildet dann die Grenze, bis zu der die gesamte Batterie entladen werden kann, ohne dass eine Zelle der Batterie aufgrund von Tiefentladung geschädigt wird.

Die Auswerteeinrichtung ist bevorzugt mit zumindest einem Sensormodul verbunden, welches zur Erfassung der einzelnen Zellenspannungen mehrerer Batteriezellen und zur Übertragung der erfassten Daten an die Auswerteeinrichtung vorgesehen ist. Die Sensormodule können in der Nähe der Batteriezellen angeordnet werden und dort die Zellenspannungen erfassen. Die von den Sensormodulen erfassten Daten werden potenzialgetrennt vorzugsweise digital zu der Auswerteeinrichtung übertragen. Die Anordnung des Sensormoduls in der Nähe der Batteriezellen ermöglicht, die Messleitungen zum Erfassen der Zellenspannung, welche aufgrund des anliegenden Potenzials isoliert werden müssen, kurz zu halten, da derartige Messleitungen nur bis zu dem Sensormodul geführt werden müssen. Die übrige Signalübertragung erfolgt im Kleinspannungsbereich, so dass keine besonderen Anforderungen an die elektrische Isolierung der Signalübertragung bzw. Signalübertragungsmittel gestellt werden müssen.

Vorzugsweise sind mehrere Sensormodule angeordnet, welche jeweils zur Erfassung einzelner Zellenspannungen mehrerer Batteriezellen eingerichtet sind. Die Sensormodule sind z.B. über geeignete Datenleitungen mit der Auswertereinrichtung verbunden. Die Anordnung mehrere Sensormodule hat den Vorteil, dass die Sensormodule nahe bei den Batteriezellen angeordnet werden können, um dort eine direkte Erfassung der jeweiligen Zellenspannung zu ermöglichen. Bevorzugt sind die Sensormodule so eingerichtet, dass sie die Zellenspannungen von bis zu zwanzig in Reihe geschalteten Batteriezellen einzeln erfassen. Diese Anordnung hat den Vorteil, dass das elektrische Potenzial zwischen den von einem Sensormodul ausgelesenen Batteriezellen geringer als 60 Volt ist, so dass die von dem Sensormodul erfassten Spannungen im Bereich der Kleinspannung liegen und somit geringere Anforderungen für die elektrische Isolierung der Messkreise in den Sensormodulen gelten. Die Sensormodule sind vorzugsweise so eingerichtet, dass sie die ihnen jeweils zugeordneten Batteriezellen seriell bzw. sequenziell abfragen. Diese serielle Abfrage erfolgt kontinuierlich, wobei der zeitliche Abstand zweier Abfragen bzw. Messungen einer einzelnen Batteriezelle derart kurz ist, dass eine quasi kontinuierliche Überwachung der Zellenspannung der einzelnen Batteriezelle möglich ist.

Bevorzugt ist die Auswerteeinrichtung daher ferner zur Erzeugung eines Alarmsignals eingerichtet, wenn der Grenzwert für die Zellenspannung von der aktuellen Zellenspannung einer der Batteriezellen erreicht wird. Das Alarmsignal kann zum einen an einen Bediener ausgegeben werden, so dass dieser erkennen kann, wann ein Entladezustand erreicht wird, welcher zu einer Schädigung der Batteriezellen führen kann. Darüber hinaus kann das Alarmsignal zur automatischen Steuerung des Entladevorganges genutzt werden, das heißt dass die Entladung automatisch reduziert oder gestoppt wird, wenn eine Tiefentladung und somit eine Schädigung einzelner Batteriezellen zu befürchten ist.

Ferner ist die Auswerteeinheit vorzugsweise derart eingerichtet, dass sie bei gegebenen Betriebsparametern der Batterie die Restentladedauer bis zum Erreichen des Grenzwertes durch eine der Zellenspannungen berechnen kann. Die gegebenen Betriebsparameter der Batterie umfassen insbesondere die aktuell von der Auswerteeinheit erfassten Zellenspannungen einzelner Batteriezellen und den Entladestrom. Die Berechnung der Restentladedauer bis zum Erreichen des Grenzwertes bei vorgegebener Strom- oder Leistungsentnahme ermöglicht die Berechnung der Restfahrtdauer des Unterseebootes, welche bei einem aktuellen Ladezustand der Batterie möglich ist. Die erfindungsgemäße Anlage ermöglicht dabei die zur Verfügung stehende Batteriekapazität nahezu vollständig auszunutzen und dies bereits bei einer Berechnung der Restentladedauer zu berücksichtigen. So kann die tatsächlich mögliche Restentladedauer und somit eine mögliche Fahrtdauer des Unterseebootes genauer bestimmt werden. Die Restentladedauer bzw. eine mögliche Fahrtdauer wird durch das Erreichen des Grenzwertes, das heißt einer kritischen Zellenspannung, in einer der Batteriezellen begrenzt. Aufgrund der gemessen Zellenspannungen und der übrigen Betriebsparameter der Batterie lässt sich vorausberechnen, in welcher der Zellen der Batterie der Grenzwert zuerst erreicht werden wird, wodurch die Grenze der Entladung der gesamten Batterie erreicht wird.

Darüber hinaus ist die Auswerteeinrichtung vorzugsweise zur Bestimmung der Grenzwerte auf Grundlage der Temperatur, des Säurestandes und/oder der Säuredichte in den Batteriezellen eingerichtet. Dazu sind entsprechende Sensoren vorgesehen. Beispielsweise kann die aktuelle Temperatur über entsprechende Temperatursensoren an jeder einzelnen Batteriezelle oder in bestimmten Bereichen der Batterie punktuell erfasst werden. Die Säuredichte und/oder der Säurestand wird vorzugsweise über entsprechende Sensoren für jede einzelne Batteriezelle erfasst. Alternativ kann die Säuredichte und/oder der Säurestand lediglich in ausgewählten Batteriezellen bestimmt werden. Die Erfassung der Temperatur, der Säuredichte und/oder des Säurestandes erfolgt dabei bevorzugt kontinuierlich oder in Form serieller Abtastung einzelner Messstellen in kurzer zeitlicher Abfolge quasi kontinuierlich, so dass der Auswerteeinrichtung immer aktuelle Betriebsparameter zur Verfügung stehen, auf deren Grundlage die Grenzwerte für die Zellenspannungen bestimmt werden können. Die Berücksichtigung der Temperatur, der Säuredichte und/oder des Säurestandes der Batteriezellen ermöglicht eine genauere Bestimmung dieser Grenzwerte, da die kritischen Zellenspannungen, bei denen eine Tiefentladung beginnt, neben dem Entladestrom von der Zellentemperatur, dem Säurestand und der Säuredichte abhängig sind.

Bevorzugt sind Sensormittel zur Erfassung der Temperatur, des Säurestandes und/oder der Säuredichte einzelner Batteriezellen sowie des Batteriestromes vorgesehen, wobei die Sensormittel über eine Datenübertragungseinrichtung mit der Auswerteeinrichtung verbunden sind. Besonders bevorzugt ermöglicht die Datenübertragungseinrichtung dabei eine digitale Übertragung der von den Sensormitteln erfassten Daten.

Vorzugsweise können dazu mehrere Sensormodule und/oder Sensormittel zur Erfassung der Zellenspannung bzw. der übrigen Betriebsparameter über einen gemeinsamen Datenbus mit der Auswerteeinrichtung verbunden sein. Dies reduziert die Anzahl der erforderlichen Datenleitungen, mittels derer die Sensormittel und Sensormodule mit der Auswerteeinrichtung verbunden werden. Vorzugsweise ist nur ein einziger Datenbus für die gesamte Batterie oder für Teilabschnitte der Batterie vorgesehen, mit dem sämtliche in diesem Teilabschnitt der Batterie vorhandenen Sensormittel über die Sensormodule zur Datenübertragung verbunden sind.

Die Erfindung betrifft ferner ein Verfahren zur Überwachung einer elektrischen Batterie mit mehreren Batteriezellen in einem Unterseeboot. Erfindungsgemäß werden bei dem Verfahren die Zellenspannungen der einzelnen Batteriezellen automatisch überwacht. Die Überwachung der Zellenspannungen erfolgt kontinuierlich oder in sehr kurzen zeitlichen Abständen seriell, so dass eine im Wesentlichen kontinuierliche Erfassung der einzelnen Zellenspannungen gegeben ist. Das Verfahren ermöglicht eine genauere Bestimmung der Grenze, bis zu der die Batterie ohne Schädigung der Batteriezellen entladen werden kann. Die individuelle Berücksichtigung aktuell bestimmter Zellenspannungen der einzelnen Batteriezellen ermöglicht die Berücksichtigung von Unterschieden zwischen den Batteriezellen aufgrund von Fertigungstoleranzen und/oder unterschiedlicher Betriebsparameter, beispielsweise der Temperatur. Dabei ermöglicht die Berücksichtigung der aktuellen Zellenspannung jeder einzelnen Batteriezelle, die Batterie tatsächlich soweit zu entladen, wie es die schwächste Batteriezelle zulässt. Unterschiede zwischen den einzelnen Batteriezellen werden nicht mehr pauschal durch Sicherheitsfaktoren ausgeglichen. Vielmehr werden erfindungsgemäß die Unterschiede tatsächlich erfasst, so dass eine bessere Ausnutzung der Batteriekapazität ermöglicht wird.

Die überwachten aktuellen Zellenspannungen der einzelnen Batteriezellen werden mit mit individuellen Grenzwerten für jede Batteriezelle verglichen. Dabei wird eine Entladung der Batterie solange zugelassen, bis bei einer der Batteriezellen der zulässige Grenzwert für die Zellenspannung erreicht wird. Beim Erreichen dieses Grenzwertes kann ein Alarmsignal ausgehen oder die Entladung der Batterie automatisch reduziert oder abgebrochen werden. Darüber hinaus ist es möglich, auf Grundlage der aktuellen Zellenspannungen und der gegebenen Grenzwerte die mögliche Entladedauer der Batterie und somit die Restfahrtdauer des Unterseebootes für den aktuellen Entladestrom vorauszuberechnen.

Die Grenzwerte werden, wie oben beschrieben, dynamisch auf Grundlage aktueller Betriebsparameter der Batterie, insbesondere auf Grundlage l des Entladestroms der Batterie gebildet. Dies ermöglicht, den tatsächlichen Grenzwert, bis zu dem eine Entladung der jeweiligen Batteriezelle ohne Schädigung möglich ist, möglichst genau zu bestimmen.

Nachfolgend wird die Erfindung beispielhaft anhand der beigefügten Figuren beschrieben. In diesen zeigt:
- Figur 1: ein Blockschaltbild der erfindungsgemäßen Anlage und
- Figur 2: ein Diagramm, welches die Abhängigkeit der Entladespannung vom Entladestrom zeigt.

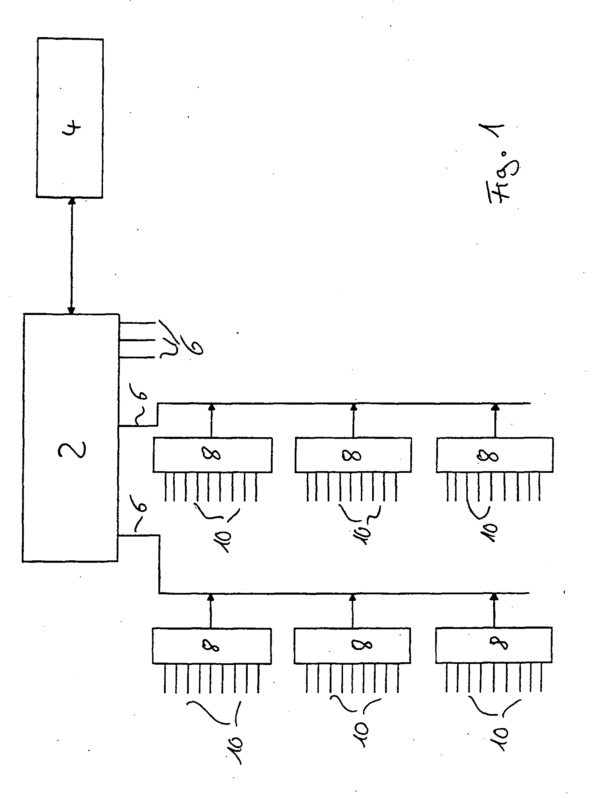

In Figur 1 ist ein Blockschaltbild der erfindungsgemäßen Anlage zur Überwachung einer Unterseeboot-Batterie, üblicherweise einer Bleibatterie, dargestellt. Wesentlicher Bestandteil der erfindungsgemäßen Anlage ist eine Auswerteeinrichtung 2. Die Auswerteeinrichtung 2 ist bevorzugt ein Computer, welcher gegebenenfalls Bedien- und/oder Anzeigeelemente zur Datenausgabe an einen Benutzer bzw. zur Dateneingabe durch einen Benutzer aufweist. Die Auswerteeinrichtung 2 kann als separater Computer nur für die erfindunggemäße Batterieüberwachung ausgebildet sein. Alternativ kann die Auswerteeinrichtung 2 als Hard- oder Softwaremodul Bestandteil einer bestehenden Computeranlage in einem Unterseeboot sein. Die Auswerteeinrichtung 2 weist eine Datenschnittstelle 4 zur Übertragung von Daten an andere Systeme bzw, zum Empfang von Daten von anderen Systemen des Unterseebootes auf. Beispielsweise können von der Auswerteeinrichtung 2 erzeugte Alarmsignale an Steuerungseinrichtungen des Unterseebootes übergeben werden, um beim Erreichen kritischer Zellenspannungen den Entladevorgang der Batterie automatisch reduzieren oder stoppen zu können.

Die Auswerteeinrichtung 2 ist über mehrere Datenbusstränge 6 mit einzelnen Sensormodulen 8 verbunden, wobei der Datenbus 6 zur digitalen Datenübertragung von ermittelten Messwerten von den Sensormodulen 8 zu der Auswerteeinrichtung 2 dient. Die Sensormodule 8 sind über Messleitungen 10 mit einzelnen Batteriezellen (hier nicht gezeigt) verbunden. Über die Messleitungen 10 werden die einzelnen Zellspannungen der jeweiligen Batteriezellen analog zu dem zugehörigen Sensormodul 8 übertragen. In dem Sensormodul 8 werden die einzelnen Zellenspannungen 10 ausgelesen, potenzialtrennend digitalisiert und die digitalisierten Messwerte dann auf den Datenbus 6 gegeben, welcher diese zu der Auswerteeinrichtung 2 weiterleitet. Die Erfassung der einzelnen Zellenspannungen in dem Sensormodul 8 erfolgt kontinuierlich oder im Wesentlichen kontinuierlich, wobei die Zellenspannungen der einzelnen, mit dem jeweiligen Sensormodul 8 verbundenen Batteriezellen seriell nacheinander in sehr kurzen zeitlichen Abständen abgefragt werden. Jedes Sensormodul 8 ist mit einer vorgegebenen Anzahl von Batteriezellen, vorzugsweise etwa zwanzig Batteriezellen, fest verbunden. Die Anordnung, bei welcher mehrere Sensormodule 8 jeweils für eine geringe Anzahl von Batteriezellen vorgesehen sind, hat den Vorteil, dass eine schnellere Erfassung der Messwerte, das heißt der einzelnen Zellenspannungen möglich ist. Darüber hinaus bleibt das maximale elektrische Potenzial zwischen den einzelnen Batteriezellen, welche mit demselben Sensormodul 8 verbunden sind, gering, d. h. im Bereich der Kleinspannung unter 60 Volt. Somit sind keine aufwändigen Isolierungen der Messkreise in den Sensormodulen 8 erforderlich, wie es bei größeren Potenzialunterschieden, welche zwischen größeren Anzahlen von Batteriezellen anliegen, notwendig wäre. Die Anordnung mehrerer Sensormodule 8 ermöglicht darüber hinaus, die Sensormodule 8 ortsnah an den Batteriezellen anzuordnen, wodurch die Messleitungen 10 kurz gehalten werden können.

Neben der Erfassung der Zellenspannungen können die Sensormodule 8 mit weiteren Sensoren zur Erfassung der Temperatur, des Säurestandes und/oder der Säuredichte an den einzelnen Zellen sowie des Batteriestromes versehen sein. Alternativ hierzu können spezielle Sensormodule 8 zur Erfassung der Säuredichte, des Säurestandes und/oder Temperatur der Batteriezellen vorgesehen sein. Diese Sensormodule können ebenfalls über den Datenbus 6 oder über einen separaten Datenbus mit der Auswerteeinrichtung 2 verbunden sein. Ebenfalls alternativ kann die Auswerteeinrichtung 2 mit Sensoren zur Erfassung des Entladestroms der Batterie verbunden sein, welche in Figur 1 nicht gezeigt sind. Der Entladestrom wird jeweils zentral für Teilbatterien oder für die gesamte Batterie erfasst. Auf Grundlage der so erfassten Daten berechnet die Auswerteeinrichtung 2 dynamisch Alarmgrenzwerte für die Zellenspannungen der einzelnen Batteriezellen, bei deren Unterschreitung die zu Schädigungen führende Tiefentladung einsetzt. Auf Grund der so bestimmten dynamischen Alarmgrenzen kann die Auswerteeinrichtung den Entladevorgang so steuern, dass die Batterie nur gerade soweit entladen wird, bis in einer der Batteriezellen der aktuelle Wert der Zellenspannung den zugehörigen Alarmgrenzwert erreicht. Darüber hinaus kann die Auswerteeinrichtung 2 die bis zum Erreichen des Alarmgrenzwertes durch die Zellenspannung in einer der Batteriezellen verbleibende Restentladezeit der Batterie bestimmen. Diese Restentladezeit bei vorgegebenem oder aktuell gemessenem Entladestrom kann zur Berechnung der Restfahrtzeit des Unterseebootes verwendet werden.

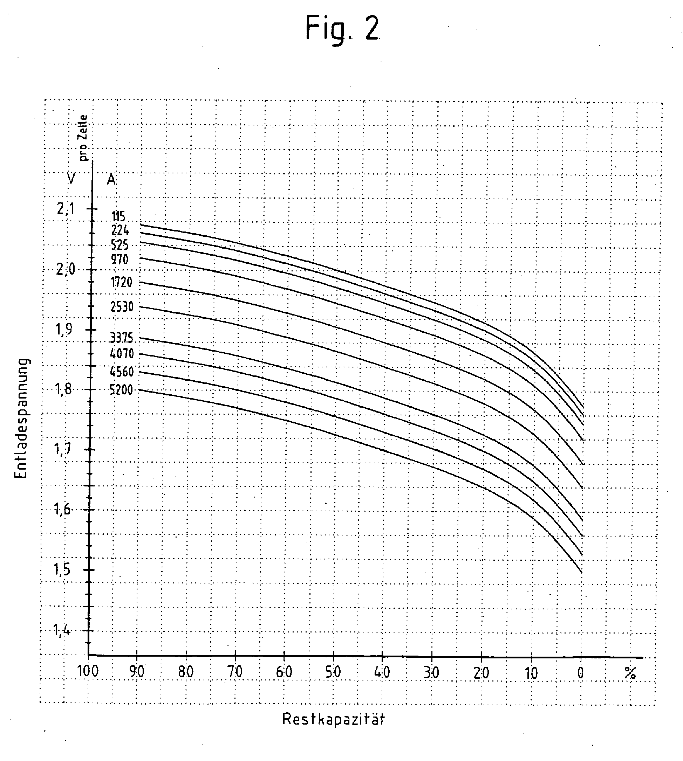

Figur 2 zeigt in einem Diagramm die Abhängigkeit der Zellenspannung vom aktuellen Entladestrom. In dem Diagramm ist die Entladespannung über der Restkapazität aufgetragen. Es sind mehrere Kurven zu unterschiedlichen Entladeströmen vorhanden, welche den Verlauf der Entladespannung über der Restkapazität für den jeweiligen Strom darstellen. Die Restkapazität stellt den Energieinhalt der Batterie bezogen auf den vollständig geladenen Zustand dar. Zu erkennen ist, dass mit zunehmender Entladung die Entladespannung abnimmt. Unterhalb einer bestimmten Entladespannung, welche einen Alarmgrenzwert darstellt, kann es zu einer irreversiblen Schädigung der Batteriezellen aufgrund von Tiefentladung kommen. Zu erkennen ist darüber hinaus, dass die Entladespannung mit steigendem Entladestrom abnimmt. Beispielsweise geht die Zellenspannung einer vollen Batterie bei Belastung mit vollem Strom sofort auf einen Wert zurück, welcher der Entlade- bzw. Zellenspannung entspricht, welche sich bei einem Entladestrom von 115 A in diesem Beispiel erst nach 97%iger Endladung einstellt. Diese Abhängigkeit der Zellenspannung vom Entladestrom wird durch das erfindungsgemäße Verfahren bei der dynamischen Bildung der Grenzwerte für die Zellenspannungen berücksichtigt. So kann die Auswerteeinrichtung 2 überwachen bzw. bestimmen, wie weit die Batterie, das heißt bis zu welcher Zellenspannung die Batterie, bei aktuellem gemessenem Entladestrom entladen werden kann, ohne dass es zu einer Schädigung von Batteriezellen kommt.

### Bezugszeichenliste

- 2: Auswerteeinrichtung
- 4: Datenschnittstelle
- 6: Datenbusstrang
- 8: Sensormodul
- 10: Messleitungen

## Patentansprüche

1. Anlage zur Überwachung einer elektrischen Batterie in einem Unterseeboot mit einer Vielzahl von Batteriezellen
die eine zentrale Auswerteeinrichtung (2) aufweist, welche zur kontinuierlichen Erfassung einzelner Zellenspannungen einzelner Batteriezellen eingerichtet ist, wobei in der Auswerteeinrichtung (2) jeweils ein Grenzwert für jede einzelne Batteriezelle
speicherbar ist und die Auswerteeinrichtung (2) zur Überwachung der erfassten Zellenspannungen der einzelnen Batteriezellen auf den jeweiligen Grenzwert hin eingerichtet ist, und
die Auswerteeinrichtung (2) eingerichtet ist zur dynamischen Bildung der Grenzwerte für die Zellenspannungen auf Grundlage aktueller Betriebsparameter der Batterie.

2. Anlage nach Anspruch 1,
**dadurch gekennzeichnet, dass**
die Auswerteeinrichtung (2) zur kontinuierlichen Überwachung der einzelnen Zellenspannungen aller Batteriezellen eingerichtet ist.

3. Anlage nach einem der vorangehenden Ansprüche,
**dadurch gekennzeichnet, dass**
die Auswerteeinrichtung (2) mit zumindest einem Sensormodul (8) verbunden ist, welches zur Erfassung der einzelnen Zellenspannungen mehrerer Batteriezellen und zur Übertragung der erfassten Daten an die Auswerteeinrichtung (2) vorgesehen ist.

4. Anlage nach einem der vorangehenden Ansprüche,
**dadurch gekennzeichnet, dass**
mehrere Sensormodule (8) vorgesehen sind, welche jeweils zur Erfassung einzelner Zellenspannungen mehrerer Batteriezellen vorgesehen sind.

5. Anlage nach einem der vorangehenden Ansprüche,
**dadurch gekennzeichnet, dass**
die Auswerteeinrichtung (2) eingerichtet ist zur Erzeugung eines Alarmsignals, wenn der Grenzwert für die Zellenspannung von der aktuellen Zellenspannung einer der Batteriezellen erreicht wird.

6. Anlage nach einem der vorangehenden Ansprüche,
**dadurch gekennzeichnet, dass**
die Auswerteeinheit (2) eingerichtet ist, bei gegebenen Betriebsparametern der Batterie die Restentladedauer bis zum Erreichen des Grenzwertes durch eine der Zellenspannungen zu berechnen.

7. Anlage nach einem der vorangehenden Ansprüche,
**dadurch gekennzeichnet, dass**
die Auswerteeinrichtung (2) zur Bestimmung der Grenzwerte auf Grundlage des Entladestroms der Batterie eingerichtet ist.

8. Anlage nach einem der vorangehenden Ansprüche,
**dadurch gekennzeichnet, dass**
die Auswerteeinrichtung (2) zur Bestimmung der Grenzwerte auf Grundlage der Temperatur, des Säurestandes und/oder der Säuredichte in den Batteriezellen eingerichtet ist.

9. Anlage nach einem der vorangehenden Ansprüche,
**dadurch gekennzeichnet, dass**
Sensormittel zur Erfassung der Temperatur, des Säurestandes und/oder der Säuredichte einzelner Batteriezellen sowie des Batteriestromes vorgesehen sind, wobei die Sensormittel über eine Datenübertragungseinrichtung (6) mit der Auswerteeinrichtung (2) verbunden sind.

10. Anlage nach einem der vorangehenden Ansprüche,
**dadurch gekennzeichnet, dass**
mehrere Sensormodule (8) und/oder Sensormittel über einen gemeinsamen Datenbus (6) mit der Auswerteeinrichtung (2) verbunden sind.

11. Verfahren zur Überwachung einer elektrischen Batterie mit mehreren Batteriezellen in einem Unterseeboot,
wobei
die einzelnen Zellenspannungen aller Batteriezellen überwacht werden,
die überwachten aktuellen Zellenspannungen der einzelnen Batteriezellen mit individuellen Grenzwerten für jede Batteriezelle verglichen werden, und
die Grenzwerte dynamisch auf Grundlage aktueller Betriebsparameter der Batterie, insbesondere auf Grundlage des Entladestromes der Batterie gebildet werden.

## Claims

1. A device for monitoring an electric battery in a submarine with a multitude of battery cells
which comprises a central evaluation device (2) which is set up for the continuous detection of individual cell voltages of individual battery cells, wherein
in each case a limit value for each individual battery may be stored in the evaluation device (2) and the evaluation device (2) is set up for monitoring the detected cell voltages of the individual battery cells with regard to the respective limit value, and
the evaluation device (2) is set up for the dynamic formation of the limit values for the cell voltages on the basis of current operating parameters of the battery.

2. A device according to claim 1, **characterised in that** the evaluation device (2) is set up for the continuous monitoring of the individual cell voltages of all battery cells.

3. A device according to one of the preceding claims, **characterised in that** the evaluation device (2) is connected to at least one sensor module (8), which is provided for detecting the individual cell voltages of several battery cells and for transmitting the detected data to the evaluation device (2).

4. A device according to one of the preceding claims, **characterised in that** several sensor modules (8) are provided, which in each case are provided for detecting individual cell voltages of several battery cells.

5. A device according to one of the preceding claims, **characterised in that** the evaluation device (2) is set up for producing an alarm signal when the limit value for the cell voltage is achieved by the active cell voltage of one of the battery cells.

6. A device according to one of the preceding claims, **characterised in that** the evaluation unit (2) is set up, with given operating parameters of the battery, to compute the remaining discharge duration until reaching the limit value by one of the cell voltages.

7. A device according to one of the preceding claims, **characterised in that** the evaluation device (2) is set up for determining the limit values on the basis of the discharge current of the battery.

8. A device according to one of the preceding claims, **characterised in that** the evaluation device (2) is set up for determining the limit values on the basis of the temperature, the acidity level and/or the acidity density in the battery cells.

9. A device according to one of the preceding claims, **characterised in that** sensor means for detecting the temperature, the acidity level and/or the acidity density of individual battery cells as well as the battery current are provided, wherein the sensor means are connected via a data transmission device (6) to the evaluation device (2).

10. A device according to one of the preceding claims, **characterised in that** several sensor modules (8) and/or sensor means are connected via a common data bus (6) to the evaluation device (2).

11. A method of monitoring an electric battery with several battery cells in a submarine, wherein
the individual cell voltages of all battery cells are monitored,
the monitored active cell voltages of the individual battery cells are compared to individual limit values for each battery cell and
the limit values are formed dynamically on the basis of active operating parameters of the battery, in particular on the basis of the discharge current of the battery.

## Revendications

1. Installation de surveillance d'une batterie électrique dans un submersible comportant plusieurs éléments de batterie, qui présente un dispositif d'évaluation central (2) qui est installé pour enregistrer en continu les tensions d'éléments individuelles des différents éléments de batterie, dans laquelle peut être respectivement mémorisée dans le dispositif d'évaluation (2) une valeur limite pour chaque élément de batterie individuel, dans laquelle le dispositif d'évaluation (2) est installé pour surveiller les tensions d'éléments enregistrées des différents éléments de batterie par rapport à la valeur limite respective, et dans laquelle le dispositif d'évaluation (2) est installé pour former dynamiquement la valeur limite des tensions d'éléments sur la base des paramètres de fonctionnement effectifs de la batterie.

2. Installation selon la revendication 1, **caractérisée en ce que** le dispositif d'évaluation (2) est installé pour surveiller en continu les tensions d'éléments individuelles de tous les éléments de batterie.

3. Installation selon l'une des revendications précédentes, **caractérisée en ce que** le dispositif d'évaluation (2) est relié à au moins un module de capteur (8) qui est prévu pour enregistrer les tensions d'éléments individuelles de plusieurs éléments de batterie et pour transmettre les données enregistrées au dispositif d'évaluation (2).

4. Installation selon l'une des revendications précédentes, **caractérisée en ce que** sont prévus plusieurs modules de capteur (8) qui sont respectivement prévus pour enregistrer les tensions d'éléments individuelles de plusieurs éléments de batterie.

5. Installation selon l'une des revendications précédentes, **caractérisée en ce que** le dispositif d'évaluation (2) est installé pour générer un signal d'alarme lorsque la valeur limite de tension d'élément est atteinte par la tension d'élément effective de l'un des éléments de batterie.

6. Installation selon l'une des revendications précédentes, **caractérisée en ce que** le dispositif d'évaluation (2) est installé de façon à calculer, pour des paramètres de fonctionnement donnés de la batterie, la durée de décharge restante avant que soit atteinte la valeur limite par l'une des tensions d'éléments.

7. Installation selon l'une des revendications précédentes, **caractérisée en ce que** le dispositif d'évaluation (2) est installé pour déterminer la valeur limite sur la base du courant de décharge de la batterie.

8. Installation selon l'une des revendications précédentes, **caractérisée en ce que** le dispositif d'évaluation (2) est installé pour déterminer la valeur limite sur la base de la température, du niveau d'acide et/ou de la densité d'acide dans les éléments de batterie.

9. Installation selon l'une des revendications précédentes, **caractérisée en ce que** sont prévus des moyens de capteur pour enregistrer la température, le niveau d'acide et/ou la densité d'acide des différents éléments de batterie, ainsi que le courant de batterie, les moyens de capteur étant reliés au dispositif d'évaluation (2) par un dispositif de transmission des données (6).

10. Installation selon l'une des revendications précédentes, **caractérisée en ce que** plusieurs modules de capteur (8) et/ou moyens de capteur sont reliés au dispositif d'évaluation (2) par un bus de données commun.

11. Procédé de surveillance d'une batterie électrique comportant plusieurs éléments de batterie dans un submersible, dans lequel les tensions d'éléments individuelles de tous les éléments de batterie sont surveillées, dans lequel les tensions d'éléments effectives surveillées des différents éléments de batterie sont comparées à des valeurs limites individuelles de chaque élément de batterie, et dans lequel la valeur limite est formée de façon dynamique sur la base des paramètres de fonctionnement effectifs de la batterie, en particulier sur la base du courant de décharge de la batterie.
